# EUROPEAN PATENT APPLICATION

(11) **EP 3 089 024 A1**
(43) Date of publication of application: **02.11.2016**
(21) Application number: 14800947.5
(22) Date of filing: 29.04.2014
(51) Int. Cl.: G06F 3/14

(54) **MULTI-SCREEN COMBINED DISPLAY METHOD AND DEVICE, AND COMPUTER STORAGE MEDIUM**

(30) Priority: 24.12.2013 CN 201310719436
(71) Applicant: ZTE Corporation, Shenzhen, Guangdong 518057 (CN)
(72) Inventor: LIANG, Zhen, Shenzhen Guangdong 518057 (CN); ZHU, Yong, Shenzhen Guangdong 518057 (CN); WANG, Shuai, Shenzhen Guangdong 518057 (CN); ZHAO, Haiqi, Shenzhen Guangdong 518057 (CN)
(74) Representative: Regimbeau
(86) International application number: PCT/CN2014/076505
(87) International publication number: WO 2014/187230

(57) **Abstract**

The present invention discloses a method and an apparatus for multi-screen combined display and a computer storage medium and relates to an interaction technology. The method includes: performing, by a plurality of devices, communication connection; determining relative positions of the plurality of devices; forming, by the plurality of terminals in communication connection, a combined screen which is composed of screens of the plurality of devices and used for displaying a content according to the relative positions; sending, by a device as a mater device for initiating a display task in the plurality of devices, display information for displaying the content to other devices as slave devices; and displaying, by the slave devices receiving the display information, a corresponding part of the content on screens of the slave devices according to the display information.

## Description

### Technical Field

The present invention relates to interaction technologies, and particularly to a method and an apparatus for realizing multi-screen combined display through interaction among devices, and a computer storage medium.

### Background

With development of terminals, large-screen terminals are already popularized, but a user sometimes still feels that the screen is not large enough during reading. However, given the portability of the terminal, the screen size of the terminal may not be designed to be too large.

### Summary

In view of this, embodiments of the present invention provide a method and an apparatus for multi-screen combined display and a computer storage medium, which can solve a problem of expanding reading area of the user without changing a current device.

To achieve above purposes, technical solutions in embodiments of the present invention are realized as follows:
according to one aspect of the present invention, embodiments of the present invention provide a method for multi-screen combined display, including:
   establishing a communication connection between a plurality of devices;
   determining relative positions of the plurality of devices;
   forming a combined screen for displaying a content by screens of the plurality of devices in the communication connection according to the relative positions;
   sending, by a master device which initiates a display task, display information for displaying the content to other devices as slave devices; and
   displaying, by the slave devices receiving the display information, a corresponding part of the content on screens of the slave devices according to the display information.

Preferably, the method further includes: respectively displaying, by each of the plurality of devices, the respective relative position on a corresponding screen after establishing the communication connection between a plurality of devices, so that the plurality of devices are put together according to relative positions.

Preferably, the communication connection is established after sensors arranged at edges of the plurality of devices are triggered, and the relative positions are determined through device detection.

Preferably, sending, by the master device which initiates the display task, display information for displaying the content to other devices as slave devices includes:
displaying, by the master device, part of the content according to the relative positions; and
generating and sending, by the master device, the display information containing an address of the content and a current display status of the master device, or an address of the master device and the current display status of the master device to the slave devices.

Preferably, displaying, by the slave devices receiving the display information, the corresponding part of the content on screens of the slave device according to the display information includes:
parsing, by the slave devices, the display information received from the master device to obtain the address of the content and the current display status of the master device, or to obtain the address of the master device and the current display status of the master device; and
determining, by each of the slave devices, the corresponding part of the content to be displayed according to the relative position and the current display status of the master device and displaying the corresponding part on a screens of each of the slave devices.

Preferably, the method further includes:
when the content is moved on the screen of a slave device, sending, by the slave device as a new master device, change information of the display part of the new master device to other devices as the slave devices; and
redetermining, by the slave devices receiving the change information, the corresponding part of the content to be displayed according to the change information and displaying the corresponding part on the screen of each of the slave devices.

Preferably, sending, by the master device which initiates the display task, display information for displaying the content to other devices as slave devices includes:
determining, by the master device, the corresponding part of the content to be displayed on the plurality of devices according to the relative positions and a screen size of the combined screen; and
generating and sending, by the master device, the display information to the slave devices, wherein the display information includes the corresponding part of the content to be displayed on the slave devices.

Preferably, the method further includes:
when the content is moved on the screen of a slave device, sending, by the slave device, operation information of moving the content to the master device; and
redetermining, by the master device, the corresponding part of the content to be displayed on the plurality of devices according to the operation information, generating and sending the display information to the slave devices, wherein the display information includes the corresponding part of the content redetermined by the master device to be displayed on the slave devices.

Preferably, a total number of the plurality of devices is at least two.

According to another aspect of the present invention, embodiments of the present invention provide an apparatus for multi-screen combined display, including a combined screen generation module, a transmission module and a display module, wherein
the combined screen generation module is configured to establish a communication connection between a plurality of devices, determine relative positions of the plurality of devices and enable screens of the plurality of devices to form a combined screen for displaying a content in the communication connection according to the relative positions;
the transmission module is configured to enable a master device which initiates a display task to send display information for displaying the content to other devices as slave devices; and
the display module is configured to enable the slave devices receiving the display information to display a corresponding part of the content on screens of the slave devices according to the display information.

Embodiments of the present invention further provide a computer storage medium, wherein the computer storage medium stores computer executable instructions for performing the above method for multi-screen combined display.

Compared with an existing technology, the technical solutions of embodiments of the present invention temporarily expand the reading area of the user through software without changing the current device; and such a display mode is especially suitable for displaying contents that have formats, such as document files, image files, web pages, etc..

### Description of the Drawings

Figure 1 is a principle block diagram showing a method for multi-screen combined display provided in embodiments of the present invention.
Figure 2 is a schematic diagram showing vertical combined display of two terminals provided in embodiments of the present invention.
Figure 3 is a schematic diagram showing horizontal combined display of two terminals provided in embodiments of the present invention.
Figure 4 is a schematic diagram showing matrix type combined display of four terminals provided in embodiments of the present invention.
Figure 5 is a flow chart of realizing multi-screen combined display in an application-level provided in embodiments of the present invention.
Figure 6 is a flow chart of realizing multi-screen combined display in a system-level provided in embodiments of the present invention.

### Detailed Description

Preferred embodiments of the present invention will be explained below in detail in combination with drawings. It should be understood that the preferred embodiments described below are only used for describing and explaining the present invention, but are not used for limiting the present invention.

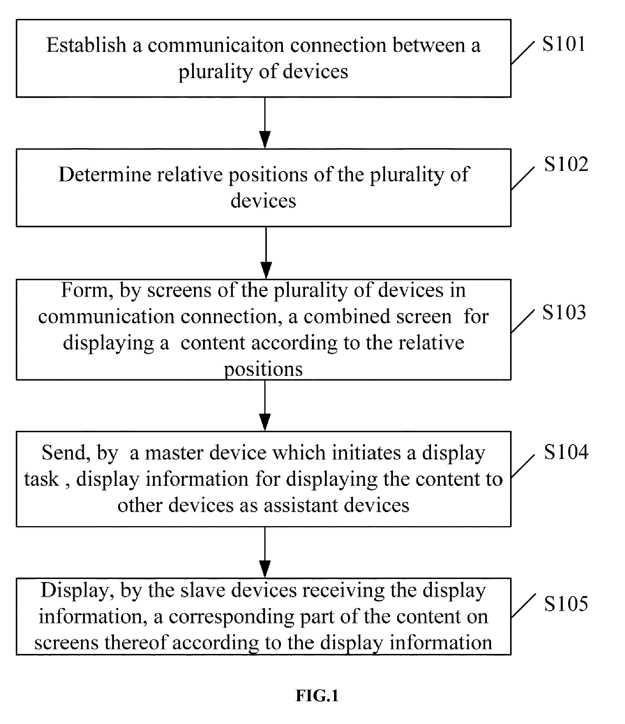

Figure 1 is a principle block diagram showing a method for multi-screen combined display provided in embodiments of the present invention. As shown in Figure 1, the method mainly includes S101 to S105.

In S101, a communication connection is established between a plurality of devices.

In S102, relative positions of the plurality of devices are determined.

In S103, a combined screen for displaying a content is formed by screens of the plurality of devices in the communication connection according to the relative positions.

Preferably, the respective relative position is displayed by each of the plurality of devices on a corresponding screen after the communication connection is established between the plurality of devices, so that the user puts the plurality of devices together according to the relative positions. For example, after the communication connection is establish between the plurality of devices, the plurality of devices are put together according to serial numbers respectively displayed by the plurality of devices, so as to form a combined screen.

Alternatively, preferably, the communication connection is established after sensors arranged at edges of the plurality of devices are triggered, and the relative positions are determined through device detection. That is, firstly the plurality of devices are arranged, then the sensors arranged at the edges of the devices are triggered, so that the communication connection is established between the plurality of devices; and then the relative positions are determined through device detection by the plurality of devices in communication connection, so as to form a combined screen.

In S104, a master device, which initiates a display task, sends display information for displaying the content to other devices as slave devices.

In S105, the slave devices receiving the display information display a corresponding part of the content on screens thereof according to the display information.

Preferably, in S104, the master device displays part of the content according to the relative positions, generates and sends the display information to the slave devices, wherein the display information contains an address of the content and a current display status of the master devices, or contains an address of the master device and the current display status of the master device. Accordingly, in S105, the slave devices parse the received display information to obtain the address of the content and the current display status of the master device, or to obtain the address of the master device and the current display status of the master device, and each of the slave devices determines the corresponding part of the content to be displayed according to the relative position and the current display status of the master device and displays the corresponding part on a screens thereof.

It should be noted that if the address of the content is obtained after parsing, the corresponding content is obtained in advance through the address, so that each of the slave devices is able to subsequently display the corresponding part.

Preferably, when the content is moved on the screen of a slave device, the slave device as a new master device sends change information of the display part thereof to other devices as the slave devices, and the slave devices receiving the change information redetermine the corresponding part of the content to be displayed according to the change information and display the corresponding part on the screens thereof.

Alternatively, preferably, in S104, the master device determines the corresponding part of the content to be displayed on the plurality of devices according to the relative positions and a screen size of the combined screen, generates and sends the display information to the slave devices, wherein the display information includes the corresponding part of the content to be displayed on the slave devices. And then the slave devices parse the display information and display a obtained relevant part of the content on the corresponding screen. Preferably, when the content is moved on the screen of a slave device, the slave device sends operation information of moving the content to the master device; and the master device redetermines the corresponding part of the content to be displayed on the plurality of devices according to the operation information, generates and sends the display information to the slave devices, wherein the display information includes the corresponding part of the content redetermined by the master device to be displayed on the slave devices.

Embodiments of the present invention further provide an apparatus for multi-screen combined display for realizing the above method for multi-screen combined display. The apparatus can be arranged on any device having screen, such as touch screen terminals, etc.. The apparatus includes a combined screen generation module, a transmission module and a display module.

The combined screen generation module is configured to establish a communication connection between the plurality of devices, determine relative positions of the plurality of devices and enable screens of the plurality of devices in the communication connection to form a combined screen for displaying a content according to the relative positions.

Here, the combined screen can be formed by multiple modes. For example, after the communication connection is established between the plurality of devices, the plurality of devices are put together according to serial numbers displayed on the plurality of devices, so as to form the combined screen. For another example, firstly the plurality of devices are arranged, then the sensors arranged at the edges of the devices are triggered, so that the communication connection is established between the plurality of devices; and then the relative positions are determined through device detection by the plurality of devices in the communication connection, so as to form the combined screen.

The transmission module is configured to enable a master device which initiates a display task to send display information for displaying the content to other devices as slave devices.

The display module is configured to enable the slave devices receiving the display information to display a corresponding part of the content on screens of the slave devices according to the display information.

Preferably, the transmission module of the master device displays part of the content according to the relative positions, generates and sends the display information to the slave devices, wherein the display information contains an address of the content and a current display status of the master device, or contains an address of the master device and the current display status of the master device,. Accordingly, the display module of the slave devices parses the received display information to obtain the address of the content and the current display status of the master device, or to obtain the address of the master device and the current display status of the master device, and determines the corresponding part of the content to be displayed according to the relative position and the current display status of the master device and displays the corresponding part on the screens thereof It should be noted that if the address of the content is obtained after parsing, the corresponding content is obtained in advance through the address, so that each of the slave devices is able to subsequently display the corresponding part.

Preferably, when the content is moved on the screen of a slave device, the slave device is used as a new master device, the transmission module of the new master device sends change information of the display part of the new master device to other devices as the slave devices; and the display module of the slave devices receiving the change information redetermines the corresponding part of the content to be displayed according to the change information and displays the corresponding part on the screen thereof.

Alternatively, preferably, the transmission module of the master device determines the corresponding part of the content to be displayed on the plurality of devices according to the relative positions and the screen size of the combined screen, generates and sends the display information to the slave devices, wherein the display information includes the corresponding part of the content to be displayed on the slave devices; and then the display module of the slave devices parses the display information and displays the obtained relevant part of the content on the corresponding screen. Preferably, when the content is moved on the screen of a slave device, the transmission module of the slave device sends operation information of moving the content to the master device, so that the transmission module of the master device redetermines the corresponding part of the content to be displayed on the plurality of devices according to the operation information, generates and sends the display information to the slave devices for display, wherein the display information includes the corresponding part of the content redetermined by the master device to be displayed on the slave devices.

The current display status of the above master device includes, for example, a page number, a display position, a zooming scale, etc. of a current reading page.

The above plurality of devices may be any device having screen, such as touch screen terminals, etc., and the number of the devices is at least two.

In practical application, the apparatus for multi-screen combined display can be arranged on any device having screen, such as touch screen terminals, etc. The combined screen generation module, the transmission module and the display module can be realized by a Central Processing Unit (CPU), a Digital Signal Processor (DSP) or a Field Programmable Gate Array (FPGA) of devices the apparatus for multi-screen combined display belongs to.

The method for multi-screen combined display in embodiments of the present invention is described below through specific application scenarios.

A plurality of terminals (e.g., two terminals) are interconnected through any underlying network protocol, such as Bluetooth/Wireless Local Area Networks (WLAN), etc.. The two terminals may mutually transmit a display status of a current page to each other through an agreed protocol (temporarily named as "protocol for combined content display"). Here, a master-and-slave architecture or equipotent architecture can be adopted. Taking the master-and-slave architecture as an example, a terminal 1, as a master device, transmits the page number, the display position and the zooming scale of the current reading page to a terminal 2; and the terminal 2, as a slave device, continues to display a subsequent content of the display content of the terminal 1 according to the received page number and the display position of the current reading page. That is, the content, which is not displayed in the screen of the terminal 1 and goes out of the screen area of the terminal 1 from the bottom and right edge, is continuously displayed according to a horizontal or vertical relative position relationship of the two terminals. Further, when the user performs operation of moving a page position, such as rolling, turning pages, etc. on the screen of the terminal 1 or terminal 2, the contents displayed in the screens of the two terminals are also synchronously rolled accordingly. That is, the screens of the two terminals already become a combined "large screen" at this moment for jointly displaying the content. Thus, an effect that the screens of the terminal 1 and the terminal 2 jointly display the content is realized.

Transmission object "the page number and the display position of the current reading page", described above is only a paradigm of possible transmission objects. Other possible transmission objects also include but not limited to: a Uniform Resource Identifier (URL), a website of a Uniform Resource Locator (URL), a binary file content of a currently opened page (or an agreed coding form in the "protocol for combined content display"), a file content of a currently opened document or a corresponding file storage position. A selection strategy of the transmission objects can be determined by a currently displayed document type and the document position in a local or remote server. For example: a. if the document is in the terminal 1, the file content to be displayed may be directly transmitted to the terminal 2; b. if the terminal 1 opens a page on a network, only the URL of the page may be transmitted to the terminal 2, and the terminal 2 acquires the content of the page from the network according to the URL.

If upper application software (such as browser, document reading software, etc.) is used for realizing the above solution, the upper application software is completely independent of system and type of the terminal and does not rely on a specific terminal manufacturer or terminal system. All devices where the application software can be installed may achieve a combined display effect.

If the above solution is realized on an underlying layer of the terminal system, extensive application scenarios completely independent of the upper application software may be realized. When there are a plurality of terminals, and the user starts a preset "combined display" function in the terminal system to connect the plurality of terminals, the terminals are supposed to have a "virtual large screen", i.e., a combined screen, and then any application running on the terminal system may display contents through a combined display mode. When an upper application initializes, starts and acquires parameters of the screen size of the terminals, the system informs the upper application that the screen size of the system is a resolution of the "virtual large screen". In this way, the upper application arranges an interface and the display content through the screen size of the virtual large screen, while the underlying layer of the system directly renders the content of the application across the screens of different terminals, achieving a display effect applied on two or more terminals.

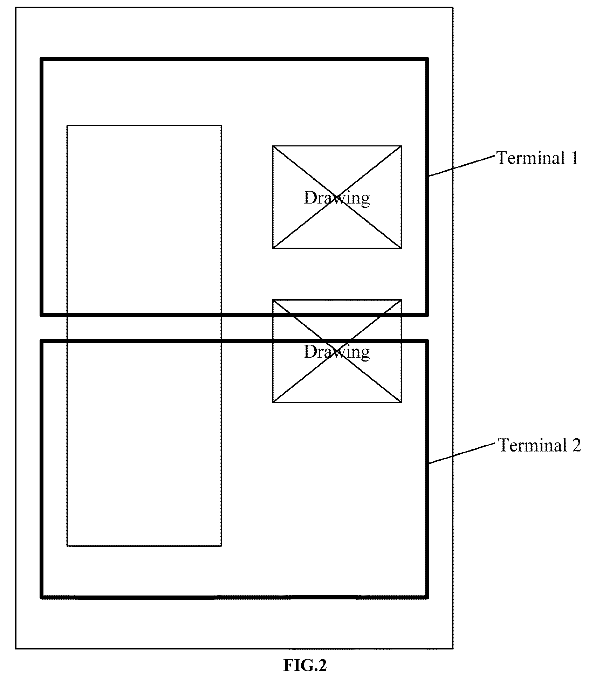

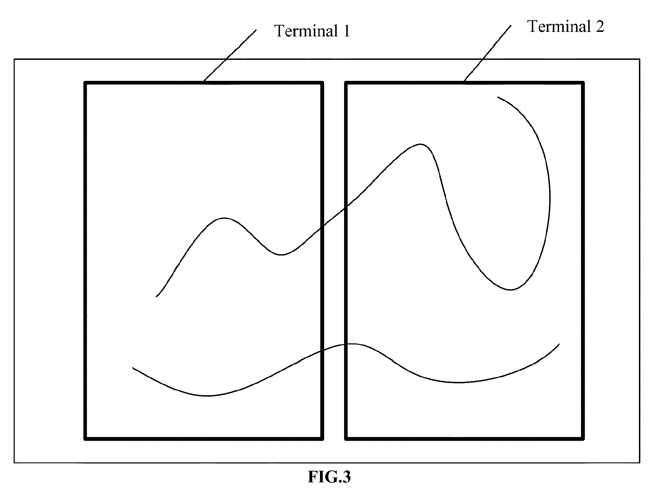

Figure 2 and Figure 3 are respectively schematic diagrams of performing vertical combined display and horizontal combined display by two terminals. With respective to a vertical combined display, the display content is coherent and page turning and rolling can be reduced; and with respective to a horizontal combined display, a horizontal presenting space can be extended.

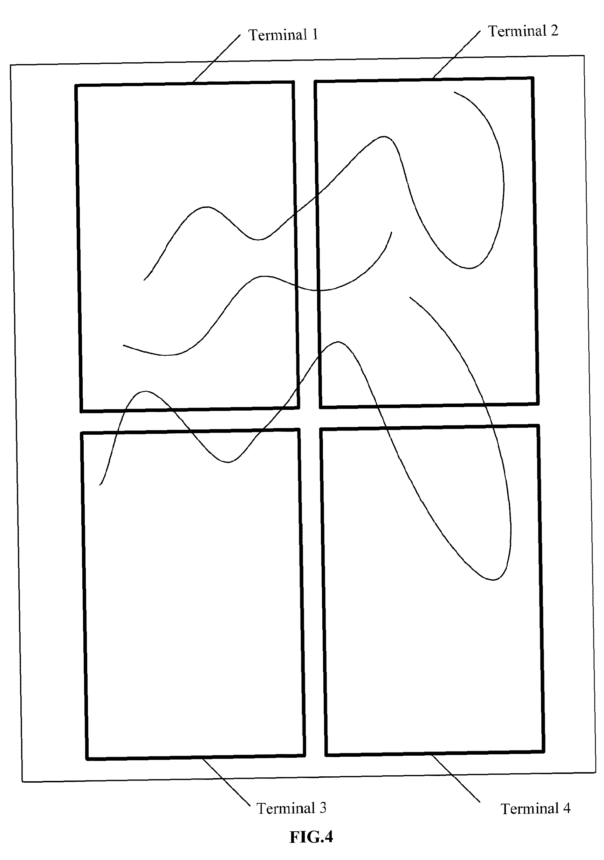

Specifically, the number of the terminals shown in Figure 2 and Figure 3 can be freely increased or decreased. For example, if a horizontal content is long, 3 or more terminals may be used and horizontally combined to form an ultra-wide large screen. Taking four terminals as an example, as shown in Figure 4, matrix type combined display of four terminals is realized.

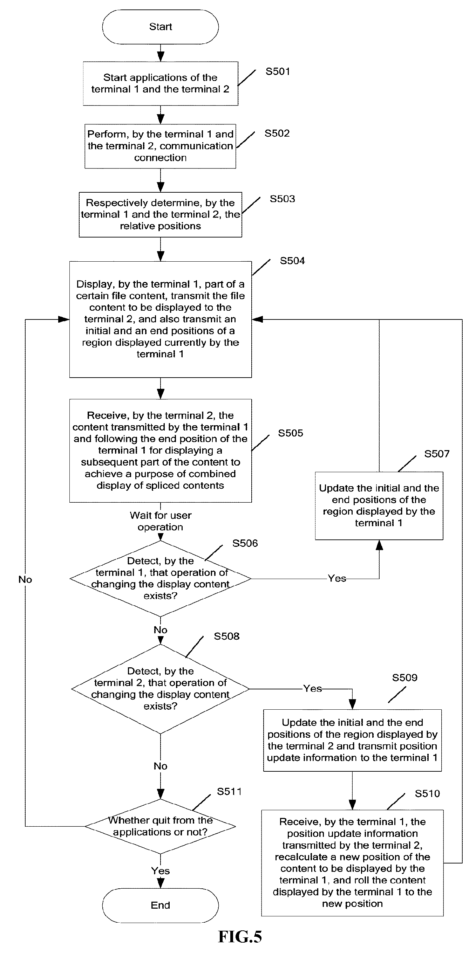

Figure 5 is a flow chart of realizing multi-screen combined display in an application-level provided in embodiments of the present invention. As shown in Figure 5, the flow mainly includes S501 to S511.

In S501, applications of the terminal 1 and the terminal 2 are started.

Specifically, the user starts a combined display function in the applications, and starts the applications of the terminal 1 and the terminal 2.

In S502, the communication connection is established between the terminal 1 and the terminal 2.

Specifically, in the combined display function, nearby other devices which already start the combined display function are listed through a function of a finding device of Bluetooth or WLAN; and according to selection of the user, the communication connection between the terminals is established through a predefined protocol.

In S503, the relative positions are respectively determined by the terminal 1 and the terminal 2.

Specifically, after the communication connection is established between the terminal 1 and the terminal 2, digits or words are displayed on terminal screens of the terminal land the terminal 2 for marking a relative position relationship, so that the user place the terminals 1 and 2 continuously in corresponding positions according to the relative position, e.g., horizontally, vertically, etc.. A template of a prearrangement mode may also be provided.

In S502 and S503, sensors, e.g. infrared sensors, distance sensors, etc. may be provided at the edges of the terminals. When the sensors at the edges of the terminals are mutually triggered, the communication connection is automatically established between the terminal 1 and the terminal 2 and the relative positions are automatically detected through device detection. In addition, a Near Field Communication (NFC) or metal contacts may also be used for triggering an automatic connection function and a detection function of the terminals.

In S504, the terminal 1 displays part of a certain file content, transmits the file content to be displayed to the terminal 2, and also transmits an initial and an end positions of a region displayed currently in the terminal 1.

Specifically, when the terminal 1 opens a website of the URL, a document, a picture or other files, the terminal 1 parses and displays part of the file content. The terminal 1 transmits the file content (or address) to be displayed to the terminal 2, and simultaneously transmits the display position in the current terminal 1, i.e. the initial and the end positions of the displayed region (or x and y values of a displayed pixel region).

In S505, the terminal 2 receives the file content transmitted by the terminal 1 and follows the end position of the terminal 1 for displaying a subsequent part of the file content, so as to achieve combined display of spliced contents.

That is, the terminal 2 receives the file content (or address) transmitted by the terminal 1, parses the file content for display, and determines a subsequent region to be displayed by the terminal 2 according to the received region displayed in the terminal 1 and the relative positions determined in S503, thereby achieving a display effect shown in Figure 2 to Figure 4.

Specifically, after the terminal 2 and the terminal 1 perform combined display of the spliced contents, the user may regulate the display content, e.g. zooming the display content.

In S506, the terminal 1 detects operation of changing the display content; if the operation of changing the display content is detected, S507 is executed; if the operation of changing the display content is not detected, S508 is executed.

In S507, the initial and the end positions of the region (or x and y values of a displayed pixel region) displayed in the terminal 1 are updated and then S504 is executed.

In S508, the terminal 2 detects whether operation of changing the display content exists; if the operation of changing the display content is detected, S509 is executed; if the operation of changing the display content is not detected, S511 is executed.

In S509, the initial and the end positions of the region (or x and y values of a displayed pixel region) displayed by the terminal 2 are updated, position update information (i.e., regenerated display information) is transmitted to the terminal 1 and then S510 is executed.

In S510, the terminal 1 receives the position update information transmitted by the terminal 2, recalculates a new position of the content to be displayed in the terminal 1, and rolls the content displayed in the terminal 1 to a new position for achieving a display effect shown in Figure 2 to Figure 4; and then S504 is executed.

In S511, it is determined whether exiting the applications or not; if so, the process ends; if not, S504 is executed.

It is known from S506 to S511 that when conventional moving operation, such as translation, rolling, zooming, etc., is performed on any terminal, the operated terminal responds to the conventional moving operation according to a realization mode in the existing technology, and changes a size and a position of the content displayed on the operated terminal. Moreover, the operated terminal transmits the change information of the current display region to other terminals, which are connected with the operated terminal, so that other terminals recalculate a new content region and a proportion to be displayed in each of the other terminals and redraw the display content for display, according to the received change information of the display region and the relative position relationship, thereby achieving a display effect shown in Figure 2 to Figure 4 again.

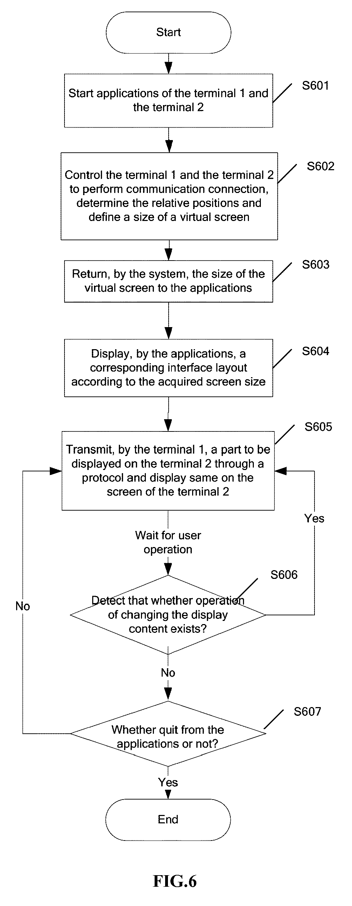

Figure 6 is a flow chart of realizing multi-screen combined display in a system level provided in embodiments of the present invention. As shown in Figure 6, the flow mainly includes S601 to S607:
In S601, applications of the terminal 1 and the terminal 2 are started.

Specifically, the user starts a combined display function in the terminals, and starts the applications of the terminal 1 and the terminal 2.

In S602, the communication connection is established between the terminal 1 and the terminal 2, the relative positions are determined and a size of a virtual screen is defined.

Specifically, the terminal 1 and the terminal 2 establish the communication connection and determine the relative positions, so that the terminal 1 and the terminal 2 form the virtual screen with a large size, that is, a combined screen. The virtual screen maps and transmits pixels to be displayed and operations corresponding to the pixels one by one to the connected terminal.

S602 may include:
Mode 1: in the combined display function, nearby other devices which already start the combined display function are listed through a function of a finding device of Bluetooth or WLAN; and according to selection of the user, the terminals are connected. The relative positions among the terminals are set, e.g., horizontally, vertically, etc. A template of a prearrangement mode may also be provided, and digits or words are displayed on each terminal screen for marking the terminals, so that the user places the terminals 1 and 2 continuously in corresponding positions according to the relative position.
Mode 2: sensors, e.g. infrared sensors, distance sensors, etc., are provided at the edges of each terminal. When the sensors at the edges of the terminals are mutually triggered, a connection function of the terminal 1 and the terminal 2 is automatically triggered and the relative positions between the terminal 1 and 2 are automatically detected. In addition, a NFC or metal contacts may also be used for automatically triggering the connection function and the detection function of the terminals.

In S603, the screen size of the virtual screen is returned by the system to the applications.

In S604, a corresponding interface layout is displayed by the applications, according to the acquired screen size.

Specifically, a layout is made by the applications, through a corresponding resolution according to the acquired screen size.

In S605, a part to be displayed on the terminal 2 (terminal n) is transmitted by the terminal 1, through a protocol and the part to be displayed is displayed in the terminal 2 (terminal n), that is, respective part of the virtual screen to be displayed is displayed by the corresponding terminal.

Specifically, the terminal 1 and the terminal 2 (terminal n) are communicated through an agreed protocol.

In S606, the operation of changing the display content is detected; if the operation of changing the display content is detected, S605 is executed; if the operation of changing the display content is not detected, S607 is executed.

In S607, it is determined whether exiting the applications or not; if so, the process ends; if not, S605 is executed.

It is known from S606 to S607 that when operation is performed on any terminal, the operated terminal system transmits the operation to the terminal which runs the application through the agreed protocol; and the application makes a corresponding response to the operation and updates a display interface and a display content of the application. The system transmits and maps a new content to all the terminals corresponding to the virtual screen, and each terminal displays the corresponding part to be displayed respectively.

Embodiments of the present invention further disclose a computer storage medium, wherein the computer storage medium stores computer executable instructions, and the computer executable instructions are used for performing the method for multi-screen combined display shown in Figure 1 in embodiments of the present invention.

In conclusion, the technical solutions of embodiments of the present invention have the following beneficial effects: expand the reading area through a simple method, which applies to touch screen terminals and any other devices having screens.

Those skilled in the art should understand that embodiments of the present invention can provide a method, system or computer program product. Therefore, the present invention can adopt a form of a hardware embodiment, a software embodiment or an embodiment combining software and hardware. Moreover, the present invention can adopt a form of a computer program product capable of being implemented on one or more computer available storage media (including but not limited to disk memory, optical memory, etc.) containing computer available program codes.

The present invention is described with reference to flow diagrams and/or block diagrams according to the method, device (system) and computer program product in embodiments of the present invention. It should be understood that each flow and/or block in the flow diagrams and/or block diagrams and a combination of flows and/or blocks in the flow diagrams and/or block diagrams can be realized through computer program instructions. The computer program instructions can be provided for a processor of a general-purpose computer, a special-purpose computer, an embedded processor, or other programmable data processing devices to generate a machine, so that a device for realizing designated functions in one or more flows of the flow diagrams and/or one or more blocks of the block diagrams is generated through the instructions executed by the processor of the computer or other programmable data processing devices.

The computer program instructions can also be stored in a computer readable memory which can guide the computer or other programmable data processing devices to operate in a special mode, so that the instructions stored in the computer readable memory generate a manufactured product including an instruction device, the instruction device realizing designated functions in one or more flows of the flow diagrams and/or one or more blocks of the block diagrams.

The computer program instructions can also be loaded on the computer or other programmable data processing devices, so that a series of operation steps are executed on the computer or other programmable devices to generate processing realized by the computer. Therefore, the instructions executed on the computer or other programmable devices provide steps for realizing designated functions in one or more flows of the flow diagrams and/or one or more blocks of the block diagrams.

The above descriptions are only preferred embodiments of the present invention. It should be noted that, for those ordinary skilled in the art, several modifications and polishes can also be made without departing from principles of embodiments of the present invention, and these modification and polishes should also be deemed to fall into the protection scope of embodiments of the present invention.

### Industrial Applicability

Embodiments of the present invention include: establishing a communication connection between the plurality of devices; determining relative positions of the plurality of devices; forming a combined screen for displaying a content by screens of the plurality of terminals in the communication connection according to the relative positions; sending, by a master device which initiates a display task, display information for displaying the content to other devices as slave devices; and displaying, by the slave devices receiving the display information, a corresponding part of the content on screens thereof according to the display information. Thus, the reading area of the user can be temporarily expanded under a condition of not changing a current device, thereby facilitating reading for the user.

## Claims

1. A method for multi-screen combined display, comprising:
establishing a communication connection between a plurality of devices;
determining relative positions of the plurality of devices;
forming a combined screen for displaying a content by screens of the plurality of devices in the communication connection according to the relative positions;
sending, by a master device which initiates a display task, display information for displaying the content to other devices as slave devices; and
displaying, by the slave devices receiving the display information, a corresponding part of the content on screens of the slave devices according to the display information.

2. The method according to claim 1, further comprising:
respectively displaying, by each of the plurality of devices, the respective relative positions on a corresponding screen after establishing the communication connection between a plurality of devices, so that the plurality of devices are put together according to relative positions.

3. The method according to claim 1, wherein,
the communication connection is established after sensors arranged at edges of the plurality of devices are triggered, and the relative positions are determined through device detection.

4. The method according to any one of claims 1 to 3,
wherein sending, by the master device which initiates the display task, display information for displaying the content to other devices as slave devices comprises:
displaying, by the master device, part of the content according to the relative positions; and
generating and sending, by the master device, the display information containing an address of the content and a current display status of the master devices, or to obtain an address of the master device and a current display status of the master device, to the slave devices.

5. The method according to claim 4, wherein
displaying, by the slave devices receiving the display information, the corresponding part of the content on screens of the slave devices according to the display information comprises:
parsing, by the slave devices, the display information received from the master device to obtain the address of the content and the current display status of the master device, or to obtain the address of the master device and the current display status of the master device; and
determining, by each of the slave devices, the corresponding part of the content to be displayed according to the relative position and the current display status of the master device and displaying the corresponding part on a screen of each of the slave devices.

6. The method according to claim 5, further comprising:
when the content is moved on the screen of a slave device, sending, by the slave device as a new master device, change information of the display part of the new master device to other devices as the slave devices; and
redetermining, by the slave devices receiving the change information, the corresponding part of the content to be displayed according to the change information and displaying the corresponding part on the screen of each of the slave devices.

7. The method according to any one of claims 1 to 3, wherein
sending, by the master device which initiates the display task, display information for displaying the content to other devices as slave devices comprises:
determining, by the master device, the corresponding part of the content to be displayed on the plurality of devices according to the relative positions and a screen size of the combined screen; and
generating and sending, by the master device, the display information to the slave devices,
wherein the display information comprises
the corresponding part of the content to be displayed on the slave devices.

8. The method according to claim 7, further comprising:
when the content is moved on the screen of a slave device, sending, by the slave device, operation information of moving the content to the master device; and
redetermining, by the master device, the corresponding part of the content to be displayed on the plurality of devices according to the operation information, generating and sending the display information to the slave devices,
wherein the display information comprises
the corresponding part of the content redetermined by the master device to be displayed on the slave devices.

9. The method according to claim 1, 2, 3, 5, 6 or 8, wherein
a total number of the plurality of devices is at least two.

10. An apparatus for multi-screen combined display, comprising a combined screen generation module, a transmission module and a display module, wherein
the combined screen generation module is configured to
establish a communication connection between a plurality of devices; determine relative positions of the plurality of devices; and
enable screens of the plurality of devices in the communication connection to form a combined screen for displaying a content according to the relative positions;
the transmission module is configured to
enable a master device which initiates a display task to send display
information for displaying the content to other devices as slave devices; and
the display module is configured to
enable the slave devices receiving the display information to display a corresponding part of the content on screens of the slave devices according to the display information.

11. A computer storage medium storing computer executable instructions for performing the method of any one of claims 1-9
